**Europäisches Patentamt**

**European Patent Office**

**Office européen des brevets**

(19)

(11) Numéro de publication: **0 101 357**
**B1**

(12) # FASCICULE DE BREVET EUROPEEN

(45) Date de publication du fascicule du brevet:
**28.01.87**

(51) Int. Cl.⁴: **H 04 Q 11/04**

(21) Numéro de dépôt: **83401534.9**

(22) Date de dépôt: **26.07.83**

(54) Autocommutateur électronique temporel modulaire en trafic et en capacité.

(30) Priorité: **05.08.82 FR 8213725**

(43) Date de publication de la demande:
**22.02.84 Bulletin 84/8**

(45) Mention de la délivrance du brevet:
**28.01.87 Bulletin 87/5**

(84) Etats contractants désignés:
**DE GB IT SE**

(56) Documents cités:
**EP - A - 0 008 067**
**EP - A - 0 018 938**
**EP - A - 0 040 046**
**DE - A - 2 405 401**
**GB - A - 2 063 622**

**COLLOQUE INTERNATIONAL DE COMMUTATION,**
**21-25 septembre 1981, Session 14A, papier 1, pages 1-9,**
**Montréal, CA. M. BALLARD et al.: "Le E10S-TSS5, un**
**système de commutation numérique polyvalent"**

(73) Titulaire: **THOMSON-CSF TELEPHONE, 146, Boulevard de Valmy, F-92707 Colombes (FR)**

(72) Inventeur: **Lecomte, Daniel, THOMSON-CSF SCPI 173, bld Haussmann, F-75379 Paris Cedex 08 (FR)**
Inventeur: **Gibaud, Michel, THOMSON-CSF SCPI 173, bld Haussmann, F-75379 Paris Cedex 08 (FR)**

(74) Mandataire: **Weinmiller, Jürgen et al, Lennéstrasse 9, D-8133 Feldafing (DE)**

ACTORUM AG

## Description

Le présente invention se rapporte à un autocommutateur électronique temporel modulaire en trafic et en capacité.

La capacité des autocommutateurs électroniques temporels privés actuellement connus n'est que faiblement variable pour un matériel donné. L'unité centrale de commande et le réseau de connexion doivent être réétudiés lorsque l'on veut augmenter sensiblement la capacité d'un autocommutateur déjà installé, ou bien il faudrait, dès l'installation, prévoir un autocommutateur de capacité maximale, ce qui, dans les deux cas, est très onéreux.

On connaît par l'article «Le E10S-TSS5, un système de commutation numérique polyvalent», référencé «Colloque international de Commutation, Semptembre 1981, Session 14A, papier 1 pages 1 à 9», un autocommutateur électronique temporel possédant une commande hiérarchisée à deux niveaux dans lequel les processeurs de commande du niveau supérieur échangent des messages avec les processeurs de commande du niveau inférieur, répartis dans des unités terminales, par l'intermédiaire de liaisons semi-permanentes, établies à travers le réseau temporel de connexion de l'autocommutateur, entre des liaisons multiplexes reliées soit aux processeurs de commande du niveau supérieur, soit aux processeurs de commande du niveau inférieur. Une telle organisation ne convient pas bien à un autocommutateur à calculateur central susceptible de ne comporter qu'un alvéole secondaire unique en première installation.

On connaît également par le document EP-A-0 040 046 un système modulaire de télécommunications possédant aussi une commande hiérarchisée à deux niveau comprenant un calculateur central pour superviser des processeurs du niveau inférieur qui sont chargés chacun de la commande d'un groupe de terminaisons.

Le processeur central communique avec les processeurs de groupe par l'intermédiaire d'un bus commun auquel les processeurs sont reliés en chaîne, les terminaisons des groupes communiquant entre elles par l'intermédiaire d'un autre bus commun auquel elles sont reliées en chaîne. Mais de manière connue, la défaillance d'une liaison commune et donc ici d'un bus risque de bloquer la totalité des unités qui lui sont connectées.

Pour remédier à ses inconvénients, la présente invention propose donc un autocommutateur électronique temporel dont la capacité puisse être augmentée facilement au fur et à mesure de l'augmentation du nombre de lignes, de la façon la plus économique possible.

L'autocommutateur électronique temporel selon l'invention est doté d'une unité centrale, comportant un processeur central et un réseau de connexion, et d'un ou de plusieurs alvéoles secondaires réunissant chacun plusieurs terminaisons placées sous la commande d'un processeur de supervision et d'exploration et reliées par jonctions MIC bidirectionnelles partagées au réseau de connexion.

Selon une caractéristique de l'invention, chaque processeur de supervision et d'exploration affecté à un alvéole secondaire est relié par une liaison individuelle de message bidirectionnelle et une interface bidirectionnelle au processeur central pour tous leurs échanges de messages, les terminaisons d'un alvéole secondaire, commandées par le processeur de supervision et d'exploration de cet alvéole, étant toutes connectées à une même jonction bidirectionnelle MIC reliant individuellement l'alvéole considéré au réseau de connexion.

La présente invention sera mieux comprise à la lecture de la description détaillée d'un mode de réalisation pris comme exemple non limitatif et illustré par le dessin annexé, sur lequel:

la figure 1 est un schéma synoptique d'un autocommutateur conforme à l'invention, et

la figure 2 est un schéma synoptique partiel d'un alvéole secondaire de l'autocommutateur de la figure 1.

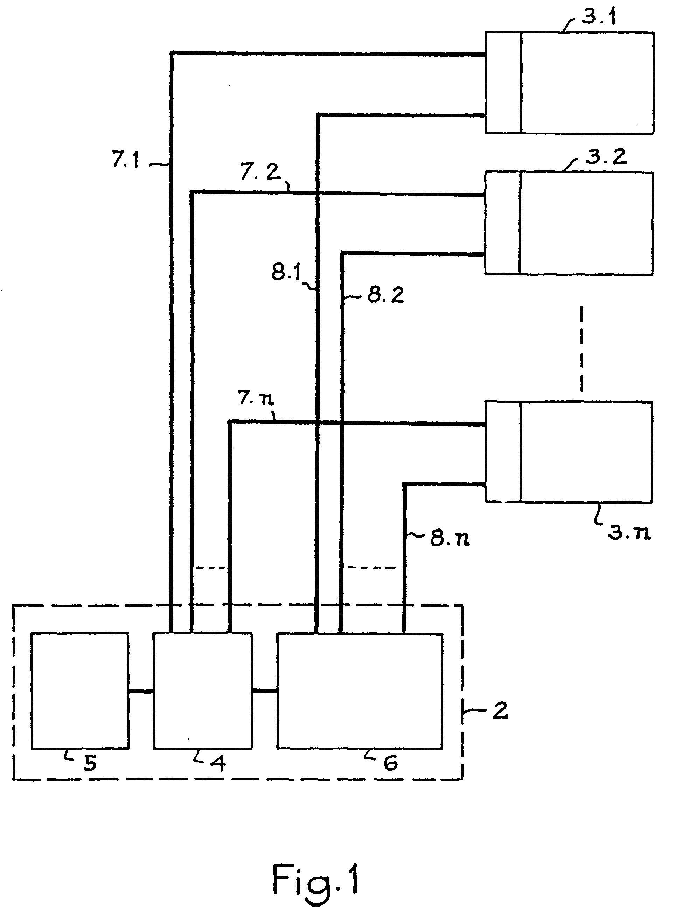

L'autocommutateur 1 schématiquement représenté sur la figure 1 est un autocommutateur électronique temporel MIC modulaire privé ou public, dont la capacité peur varier dans de très larges limites, comme expliqué ci-dessous.

L'autocommutateur 1 comporte une untié centrale 2 et n alvéoles secondaires référencés 3.1 à 3.n, le nombre n pouvant varier de 1 à 8 dans le présent exemple, en fonction des besoins de l'utilisateur. Toutefois, selon d'autres modes de réalisation, le nombre n peut être beaucoup plus élevé: quelques dizaines ou quelques centaines, selon la taille du réseau de connexion de l'unité centrale 2, comme on le verra ci-dessous.

L'unité centrale 2 comprend essentiellement un processeur central 4 (dans le cas de fortes charges de travail ou pour des mesures de sécurité, on peut prévoir plusieurs processeurs) associé à des mémoires de programmes et de données 5 de capacité appropriée, le processeur central commandant, de façon connue en soi, un réseau de connexion 6, de préférence du type sans blocage au sens strict. Le processeur central 4 est relié à chacun des alvéoles 3.1 à 3.n par une liaison individuelle de message bidirectionnelle 7.1 à 7.n respectivement. Le réseau de connexion 6 est relié à chacun des alvéoles 3.1 à 3.n par un ensemble de deux bus de données unidirectionnels, ensembles respectivement référencés 8.1 à 8.n. Selon un mode de réalisation préféré, le réseau 6 est une matrice temporelle symétrique 8×8 jonctions MIC.

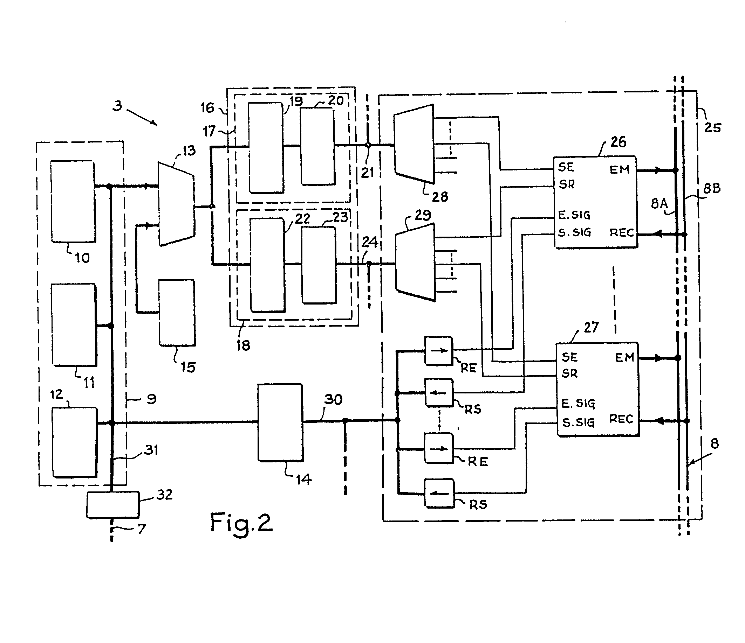

L'alvéole secondaire 3 partiellement représenté sur la figure 2 comporte un calculateur 9 qui comprend essentiellement un microprocesseur 10 relié à un bus 31 qui est également relié à une mémoire 11 contenant les divers programmes de signalisation et d'exploration des terminaisons, et à une mémoire 12 servant à sauvegarder certaines données de fonctions propres aux terminaisons.

Le bus 31 est d'une part relié à une interface bidirectionnelle 32 pour la transmission des messages entre le calculateur 9 de l'alvéole secondaire 3 et l'unité centrale 2.

Le bus 31 est d'autre part relié à une entrée d'un multiplexeur 13 à deux entrées et à une interface bidirectionnelle 14. L'autre entrée du multiplexeur 13 est reliée à un compteur 15 d'intervalles de temps. La sortie du multiplexeur 13 est reliée à l'entrée d'un circuit 16 de sélection de terminaisons. Le circuit 16 se compose d'un circuit 17 de sélection d'instant d'émission et d'un circuit 18 de sélection d'instant de réception, les entrées des circuits 17 et 18 étant toutes deux reliées à la sortie du multiplexeur 13. Le circuit 17 comprend une mémoire 19 comportant, pour chaque intervalle de temps de l'alvéole de terminaison 3, l'adresse de la carte et de la terminaison à sélectionner en tant qu'émetteur. La mémoire 19 est suivie d'un démultiplexeur primaire 20 de sélection de carte dont la sortie est reliée à un bus 21. Le circuit 18 comprend une mémoire 22 comportant, pour chaque intervalle de temps de l'alvéole, l'adresse de la carte et de la terminaison à sélectionner en tant que récepteur. La mémoire 22 est suivie d'un démultiplexeur primaire de sélection de carte dont la sortie est reliée à un bus 24.

On relie aux bus 21 et 24 plusieurs, par exemple huit, cartes de terminaisons telles que la carte 25, seule représentée sur le dessin dans un but de simplification. Chaque carte de terminaisons comprend plusieurs, par exemple quatre, huit, ou seize terminaisons. Sur le dessin, on a représenté pour la carte 25, seulement deux terminaisons, à savoir les terminaisons référencées 26 et 27. Ces terminaisons sont des équipements de lignes d'abonnées, des joncteurs réseau, etc. . . Chaque carte telle que la carte 25 comporte en outre un démultiplexeur secondaire 28 de sélection de terminaison émettrice et un démultiplexeur secondaire 29 de sélection de terminaison émettrice et un démultiplexeur secondaire 29 de sélection de terminaison réceptrice. L'entrée du démultiplexeur 28 est reliée au bus 21, et ses différentes sorties sont reliées chacune à une entrée SE de sélection émission d'une terminaison correspondante. L'entrée du démultiplexeur 29 est reliée au bus 24, et ses différentes sorties sont reliées chacune à une entrée SR de sélection réception d'une terminaison correspondante. La sortie de l'interface 14 est reliée à un bus 30. Chaque terminaison comporte une entrée de signalisation E.SIG pour recevoir la signalisation en provenance du calculateur 9, et une sortie de signalisation S.SIG pour envoyer de la signalisation au calculateur 9. Chaque entrée de signalisation E.SIG est reliée au bus 30 par un registre d'entrée RE, et chaque sortie de signalisation S.SIG est reliée au bus 30, par un registre de sortie RS.

Chaque terminaison comporte enfin un sortie EM d'émission de données et une entrée REC de réception de données. Les sorties EM et les entrées REC de toutes les terminaisons sont respectivement reliées à un bus de données 8A et à un bus de données 8B, les bus 8A et 8B constituant l'ensemble 8.

L'unité centrale 2 supervise toutes les exploitations téléphoniques et/ou télématiques de l'autocommutateur 1. Lorsque l'une des terminaisons de l'un des alvéoles 3.1 à 3.n veut établir une communication avec une autre terminaison (du même alvéole ou d'un autre alvéole), son appel est traité, de la façon décrite ci-dessous par le calculateur 9 de son alvéole. Ce calculateur 9 échange ensuite des informations sous forme de messages avec l'unité centrale 2 via la liaison individuelle de message 7 correspondant et via l'interface 32. L'unité centrale 2 échange ensuite des messages avec le même calculateur 9 (si la terminaison demandée est rattachée au même alvéole) ou avec un autre calculateur 9, faisant partie de l'alvéole de la terminaison demandée (s'il ne s'agit pas du même alvéole). Le calculateur 9 demandé se charge alors d'appeler la terminaison demandée. Lorsque cette dernière est prête à établir la liaison avec la terminaison du demandeur, son calculateur 9 en avertit l'unité centrale 2 qui commande la commutation du réseau de connexion 6 de façon à assurer la liaison, sur des intervalles de temps choisis par l'unité centrale 2, entre la sortie EM de la terminaison du demandeur et l'entrée REC de la terminaison du demandé, et vice-versa.

Au niveau des alvéoles secondaires, l'établissement d'une communication s'effectue de la façon suivante.

Lorsqu'un demandeur (poste téléphonique ou un réseau) relié à l'une des terminaisons (d'un alvéole) veut établir une liaison avec un demandé (un autre poste téléphonique ou un autre réseau) relié à une autre terminaison (du même alvéole ou d'un alvéole différent), il envoie, par exemple par fermeture de boucle, une signalisation correspondante par la sortie S.SIG de sa terminaison au calculateur 9 via le registre RS correspondant et via l'interface 14. Le calculateur 9 de l'alvéole du demandeur fait part de cet appel à l'unité centrale 2, comme précisé ci-dessus, et l'unité centrale 2, après avoir traité cet appel, en fait part au calculateur 9 du demandé. Le calculateur 9 du demandé envoie une signalisation d'appel à l'entrée E.SIG de la terminaison du demandé via l'interface 14 et le registre RE correspondant. Dès que le demandé a fait savoir au calculateur 9 par une signalisation de retour qu'il est prêt à recevoir le demandeur, le calculateur 9 en fait part à l'unité centrale 2 qui sélectionne en fonction de la disponibilité des bus 8A et 8B, les instants d'émission des informations MIC échangées entre le demandeur et le demandé, ces instants correspondant à des intervalles de temps des bus 8A et 8B, comme expliqué ci-dessous. La sélection d'instants d'émission se fait par activation de l'entrée SE de la terminaison devant émettre pendant les intervalles de temps choisis, l'entrée SR de la terminaison réceptrice étant activée simultanément.

L'activation des entrées SE et SR des terminaisons choisies se fait de la manière suivante. Pour l'activation de SE, le calculateur 9, ayant été informé par l'unité centrale 2 de son choix d'un intervalle de temps libre du bus 8A, écrit dans la mémoire 19, à l'adresse correspondant à cet intervalle de temps, l'adresse de la terminaison qui devra émettre ses données pendant cet intervalle de temps; la mémoire 19 délivre donc l'adresse de la terminaison devant émettre, cette adresse étant validée par le compteur 15 d'intervalles de temps à chaque fois qu'il y a coïncidence entre le numéro de l'intervalle de temps choisi par l'unité centrale 2 et le numéro de l'intervalle de temps apparaissant sur le bus 8A. Bien entendu, le multiplexeur 13 fonctionne en synchronisme avec l'horloge centrale de l'autocommutateur de façon à laisser passer alternativement les informations émises par le calculateur 9 sur le bus 31 et les informations venant du compteur 15.

L'adresse de la terminaison sélectionnée comprend la sous-adresse de la carte dans laquelle se trouve cette terminaison et la sous-adresse de la terminaison en question à l'intérieur de cette carte. La première sous-adresse est traitée par le démultiplexeur 20, et al seconde par le démultiplexeur 28 de la carte en question.

L'activation de SR se fait de manière anologue par l'intermédiaire de la mémoire 22 et des démultiplexeurs 23 et 29.

Pour établir une conversation (ou échange de données de façon plus générale) bidirectionnelle entre deux terminaisons, par exemple les terminaisons 26 et 27 d'un même alvéole, il faut utiliser un intervalle de temps de chacun des bus 8A et 8B.

Le premier intervalle de temps est sélectionné lorsque le calculateur 9 active les entrées SE de la terminaison 26 et SR de la terminaison 27. Le deuxième intervalle de temps est sélectionné lorsque le calculateur 9 active les entrées SE de la terminaison 27 et SR de la terminaison 26. La sortie EM de la terminaison 26 émet ses données sur ledit premier intervalle de temps, et ces données sont reçues par l'entrée REC de la terminaison 27 via le réseau de connexion 6. La sortie EM de la terminaison 27 émet ses données sur ledit second intervalle de temps et ces données sont reçues par l'entrée REC de la terminaison 26, via le réseau de connexion 6.

Dans l'autocommutateur décrit ci-dessus, le calculateur 9 permet la supervision d'au moins une ligne MICV de trente-deux intervalles de temps, à une fréquence de 2,048 MHz. On peut donc rattacher à ce bus MIC depuis trente-deux terminaisons avec un trafic de 1 Erlang par terminaison, jusqu'à 256 terminaisons avec un trafic de 0,087 Erlang par terminaison, et une perte de 1%. La concentration des terminaisons de l'alvéole est supervisée par le calculateur 9 et non par l'unité centrale 2 qui peut donc facilement superviser un très grand nombre d'alvéoles secondaires, la capacité de l'autocommutateur dépendant alors essentiellement de la taille du réseau de connexion 6. Par exemple, si le réseau 6 est une matrice 8×8 (8 jonctions MIC émission en entrée et 8 jonctions MIC émission en sortie), la capacité de l'autocommutateur est alors de huit fois celle d'un alvéole secondaire, à savoir une capacité totale allant depuis 256 terminaisons à 1 Erlang par terminaison jusqu'à 2048 terminaisons avec un trafic de 0,087 Erlang de moyenne par terminaison et 1% de perte. Bien entendu, toutes les combinaisons de terminaisons sont possibles, par exemple 64 terminaisons à 1 Erlang et 432 terminaisons à 0,25 Erlang de moyenne avec 0,1% de perte. Il est également bien entendu que si l'on augmente la taille du réseau de connexion 6, on augmente corrélativement la capacité de l'autocommutateur.

En conclusion, avec un type de réseau de connexion donné, on couvre une vaste gamme de capacités, et ce, avec un seul type de matériel, ce qui diminue sensiblement le prix de revient d'un autocommutateur de cette gamme, et on peut facilement augmenter le nombre de terminaisons d'un autocommutateur déjà installé en rajoutant d'autres alvéoles secondaires, et ce, bien entendu, dans la limite de capacité du réseau de connexion qu'il est facile de prévoir suffisamment important au moment de l'installation pour couvrir une éventuelle augmentation ultérieure des besoins en nombre de terminaisons.

**Revendications**

1. Autocommutateur électronique temporel, modulaire en trafic et en capacité, doté d'une unité centrale (2) comportant un processeur central (4) et un réseau de connexion (6), ainsi que d'un ou de plusieurs alvéoles secondaires (3.1) réunissant chacun plusieurs terminaisons (26 ou 27) placées sous la commande d'un processeur de supervision et d'exploration (9) et reliées au réseau de connexion par des jonctions bidirectionnelles MIC partagées (8A, 8B), caractérisé en ce que chaque processeur de supervision et d'exploration, qui est affecté à un alvéole secondaire, est relié par une liaison individuelle de message (7.1) bidirectionnelle et une interface bidirectionnelle (32) au processeur central (4) pour tous les échanges avec ce processeur central et en ce que les terminaisons (26, 27) d'un alvéole secondaire, commandées par le processeur de supervision et d'exploration de cet alvéole, sont toutes connectées à une même jonction bidirectionnelle MIC reliant individuellement l'alvéole considéré au réseau de connexion.

2. Autocommutateur selon la revendication 1 dans lequel chaque alvéole secondaire comporte des terminaisons (26, 27) telles qu'équipements de lignes d'abonnés, joncteurs réseau, etc..., caractérisé par le fait que le processeur (7) de chaque alvéole secondaire est relié par l'intermédiaire d'un circuit de sélection d'émission (17) et d'un circuit de sélection de réception (18), aux entrées de sélection d'émission (SE) et de sélection de réception (SR) respectivement d'un ou plusieurs ensembles (25) de plusieurs terminaisons (26, 27), lesdits circuits de sélection étant également reliés à un compteur d'intervalles de temps (15).

3. Autocommutateur selon la revendication 2, caractérisé par le fait que le circuit de sélection d'émission et le circuit de réception d'un alvéole comportent chacun une mémoire (19, 22) d'adresse de terminaison à sélectionner pour chaque intervalle de temps, cette mémoire étant suivie d'un démultiplexeur primaire (20 ou 23) dont la sortie est reliée à un bus (21 ou 24) auquel sont reliés tous les ensembles de plusieurs terminaisons de l'alvéole.

4. Autocommutateur selon la revendication 3, caractérisé par le fait que chaque ensemble de plusieurs terminaisons d'un alvéole comporte un démultiplexeur secondaire (28) de sélection de terminaison émettrice et un démultiplexeur secondaire (29) de sélection de terminaison réceptrice.

5. Autocommutateur selon la revendication 3, caractérisé par le fait que le processeur (9) de chaque alvéole est relié aux entrées et sorties de signalisation de chaque terminaison de l'alvéole par une interface bidirectionnelle (14) commune, en série avec des registres individuels (RE, RS).

**Patentansprüche**

1. Elektronisches Zeitmultiplex-Selbstwählvermittlungsamt, das in bezug auf Verkehr und Kapazität modular aufgebaut ist und eine Zentraleinheit (2), die einen zentralen Prozessor (4) und ein Vermittlungsnetz (6) aufweist, sowie eine oder mehrere Sekundäreinschübe (3.1) besitzt, die je mehrere von einem Überwachungs- und Abfrageprozessor (9) gesteuerte Leitungsenden (26 oder 27) zusammenfasst, wobei diese Leitungsenden über zeitmultiplexierte bidirektionale zuteilbare PCM-Verbindungen (8A, 8B) an das Vermittlungsnetz angeschlossen sind, dadurch gekennzeichnet, dass jeder Überwachungs- und Abfrageprozessor, der für einen Sekundäreinschub zuständig ist, über eine individuelle bidirektionale Nachrichtenverbindung (7.1) und eine bidirektionale Schnittstelle (32) an den zentralen Prozessor (4) für jeden Verkehr mit diesem Zentralprozessor angeschlossen ist, und dass die vom Überwachungs- und Abfrageprozessor dieses Einschubs gesteuerten Leitungsenden (26, 27) eines Sekundäreinschubs alle mit derselben bidirektionalen PCM-Verbindung verbunden sind, die individuell den betrachteten Einschub mit dem Vermittlungsnetz verbindet.

2. Selbstwählvermittlungsamt nach Anspruch 1, in dem jeder Sekundäreinschub Endleitungen (26, 27) wie Teilnehmerleitungsgeräte, Netzanschlusseinrichtungen usw. aufweist, dadurch gekennzeichnet, dass der Prozessor (7) jedes Sekundäreinschubs über einen Sendeauswahlkreis (17) und einen Empfangsauswahlkreis (18) an die Sendeauswahleingänge (SE) bzw. die Empfangsauswahleingänge (SR) einer oder mehrere Einheiten (25) von mehreren Endleitungen (26, 27) angeschlossen ist und dass die Auswahlkreise ebenfalls an einen Zeitintervallzähler (15) angeschlossen sind.

3. Selbstwählvermittlungsamt nach Anspruch 2, dadurch gekennzeichnet, dass der Sendeauswahlkreis und der Empfangsauswahlkreis eines Einschubs je einen Adressspeicher (19, 22) zur Speicherung der Adresse der für jedes Zeitintervall auszuwählenden Endleitung aufweisen, wobei diesem Speicher ein primärer Demultiplexer (20 oder 23) nachgeschaltet ist, dessen Ausgang an eine Schiene (21 oder 24) führt, mit der alle Einheiten von mehreren Endleitungen des Einschubs verbunden sind.

4. Selbstwählvermittlungsamt nach Anspruch 3, dadurch gekennzeichnet, dass jede Einheit von mehreren Endleitungen eines Einschubs einen Sekundärdemultiplexer (28) zur Auswahl der sendenden Endleitung und einen Sekundärdemultiplexer (29) zur Auswahl der empfangenden Endleitung aufweist.

5. Selbstwählvermittlungsamt nach Anspruch 3, dadurch gekennzeichnet, dass der Prozessor (9) jedes Einschubs an die Signalisationsein- und -ausgänge jeder Endleitung des Einschubs über eine gemeinsame bidirektionale Schnittstelle (14) in Reihe mit individuellen Registern (RE, RS) angeschlossen ist.

**Claims**

1. An automatic electronic time division switching system which is modular in traffic and capacity and comprises a central unit (2) including a central processor (4) and a switching network (6) as well as one or several secondary bays (3.1) each bringing together a plurality of terminals (26 or 27) placed under the control of a supervising and exploring processor (9) and connected to a switching network via bidirectional shared PCM junctions (8A, 8B), characterized in that each supervising and exploring processor which is attributed to a secondary bay is connected via a bidirectional individual message link (7.1) and a bidirectional interface (32) to the central processor (4) for all the exchanges with this central processor, and that the terminals (26, 27) of a secondary bay, which are controlled by the supervising and exploring processor of this bay, are all connected to the same bidirectional PCM junction connecting individually the respective bay to the switching network.

2. An automatic switching system according to claim 1, in which each secondary bay comprises terminals (26, 27) such as subscriber line equipments, network junctors and so on, characterized in that the processor (7) of each secondary bay is connected via a transmission selector circuit (17) and a reception selector circuit (18) to the transmission selector inputs (SE) and the reception selector inputs (SR) respectively of one or several sets (25) of a plurality of terminals (26, 27), said selector circuit being further connected to a time interval counter (15).

3. An automatic switching system according to claim 2, characterized in that the transmission selector circuit and the reception circuit of a bay each comprise a memory (19, 22) for storing the address of the terminal to be selected during each time interval, said memory being followed by a primary demultiplexer (20 or 23), the output of which is connected to a bus (21 or 24) to which all the sets of several terminals of the bay are connected.

4. An automatic switching system according to claim 3, characterized in that each set of several terminals of a bay comprises a secondary demultiplexer (28) for selecting the transmitting terminal and a secondary demultiplexer (29) for selecting the receiving terminal.

5. An automatic switching system according to claim 3, characterized in that the processor (9) of each bay is connected to the signalisation inputs and outputs of each terminal of the bay via a common bidirectional interface (14), in series with individual registers (RE, RS).

Fig.1

Fig.2